# EUROPEAN PATENT SPECIFICATION

(11) **EP 2 042 632 B1**
(45) Date of publication and mention of the grant of the patent: **02.01.2013**
(21) Application number: 07768323.3
(22) Date of filing: 06.07.2007
(51) Int. Cl.: D04B 35/00, A41H 43/00, G06F 17/50, D04B 37/00, D04B 37/02

(54) **SIMULATION DEVICE, SIMULATION METHOD AND SIMULATION PROGRAM OF TUBULAR FABRIC**
SIMULATIONSVORRICHTUNG, SIMULATIONSVERFAHREN UND SIMULATIONSPROGRAMM FÜR SCHLAUCHWARE
DISPOSITIF DE SIMULATION, PROCÉDÉ DE SIMULATION ET PROGRAMME DE SIMULATION DE TISSU TUBULAIRE

(30) Priority: 11.07.2006 JP 2006190058
(43) Date of publication of application: 01.04.2009
(73) Proprietor: SHIMA SEIKI MANUFACTURING, LTD., Wakayama-shi, Wakayama 641-0003 (JP)
(72) Inventor: TERAI, Koichi, Wakayama-shi Wakayama 641-0003 (JP)
(74) Representative: Wagner, Karl H.
(86) International application number: PCT/JP2007/063594
(87) International publication number: WO 2008/007624

(56) References cited:
- WO-A1-2004/022828
- WO-A1-2005/082186
- JP-B2- 2 913 267

## Description

### TECHNICAL FIELD

The present invention relates to a simulation of a tubular fabric, and particularly to a simulation of a tubular fabric of which face and back are inverted.

### BACKGROUND

The inventor has proposed a three-dimensional simulation of a tubular fabric (Patent document 1 WO2005/082186). In other words, the stitch arrangement on knitting data is initially transformed to approach a natural arrangement to generate a three-dimensional image of a tubular fabric. Next, the generated three-dimensional image is transformed such that it is worn by a human body, to simulate a state in which a person wears the tubular fabric.

Incidentally, it is convenient to simulate a state in which the back of the tubular fabric, that is, the face and back of the fabric are inverted so that the inside of the tube is exposed to the outside. For example, in the design of a reversible tubular fabric which can be worn with either side facing out, it is important to evaluate the design of the back of the tube using a simulation image. Moreover, in the design of a jacquard or an intarsia jacquard where many prolongations are generated on the back of the tubular fabric due to a miss-stitch operation, it is preferred to evaluate the condition of the prolongations. For example, if excessively long prolongations are present on the inside of a glove or sweater, fingers or buttons might be entangled by the prolongation.

Related conventional arts such as Patent document 2 (Japanese Patent Application Publication No. H9-78411) and Patent document 3 (WO2004/022828) describe the design of a tubular fabric in which the design of a front fabric is right/left inverted and copied to a rear fabric. Patent document 2 further discloses designing the rear fabric while viewing from behind, and then right/left inverting the stitch positions of the rear fabric so that the types and directions of the stitches are inverted, and thereby obtaining knitting data of the rear fabric. Patent document 2, however, does not consider a simulation of the tubular fabric of which face and back are inverted. Furthermore, because Patent document 1 simulates the tubular fabric using a three-dimensional image, the inside of the tube can be seen from the openings of the neck and sleeves. However, this invention is not to display the inside by inverting the face and back of the tubular fabric.

### DISCLOSURE OF THE INVENTION

An object of the present invention is to obtain a simulation image of a tubular fabric of which face and back are inverted.

This and other objects are solved by a simulation device of a tubular fabric for simulating a tubular fabric, the simulation device having the features as set forth in claim 1. Preferred embodiments of the simulation device are stated in the subclaims 2 to 4. The objects are also met by a simulation device as defined in claim 5. Furthermore, the objects are solved by a simulation method as stated in claim 6. A preferred embodiment of the simulation method is claimed in claim 7. Also, the simulation program according to claim 8 solves the objects of the present invention. The simulation program of subclaim 9 is a preferred embodiment.

The present invention is a device for simulating a tubular fabric comprising a plurality of stitches and a front fabric and a rear fabric having at least types of face/back stitches, an upper/lower relation between overlapping stitches, and connection relation between the stitches, the device being provided with: stitch attribute inverting means for inverting the types of the stitches and the upper/lower relation of the stitches with respect to each of the front and rear fabrics; right/left position inverting means for mirror inverting positions of the stitches along a vertical centerline of the tubular fabric in a width direction, with respect to each of the front and rear fabrics; connection relation inverting means for right/left inverting the connection relation between the stitches with respect to each of the front and rear fabrics; and simulation means for generating a simulation image of the tubular fabric for an allocation of the stitches obtained by inverting a face and a back of the tube after these inversions.

Preferably, the simulation device is further provided with storage means for storing the positions, types, upper/lower relation and right/left connection relation of the stitches on each fabric, wherein the stitch attribute inverting means inverts data on the types and upper/lower relation of the stitches that are stored in the storage means, and the connection relation inverting means inverts the right/left connection relation.
More preferably, the stitch attribute inverting means inverts the types of the stitches and the upper/lower relation between the stitches by switching the front fabric and the rear fabric.

The present invention can virtually create, within the simulation device, knitting data in which the face and back of the tubular fabric are inverted, when the positions, types, upper/lower relation and right/left connection relation of the stitches are considered as main parts of the knitting data, and simulate the inverted face and back based on the knitting data.
Moreover, the features of the tubular fabric can be expressed by the positions, types, upper/lower relation and right/left connection relation of the stitches. These data items can be expressed by a two-dimensional or three-dimensional image, the positions of the stitches can be expressed by image data, and the types, upper/lower relation and right/left connection relation of the stitches can be expressed by the image data items themselves or different matters as attributes of the stitches within the image data items. For example, approximately 8 to 24 bits of data may be allocated to the pixels of the image to express the types, upper/lower relation and right/left connection relation of the stitches. Alternatively, a table in which each stitch is provided with a number and the data items of the types, upper/lower relation and right/left connection relation of the stitches are described in each stitch number may be provided, so that these data items are stored in the table as the attributes. In this manner, the features of the tubular fabric can be expressed as the image data without using yarns. Next, the stitch attributes, the right/left positions of the stitches, and the connection relation between the stitches are inverted with respect to the image of the tubular fabric expressed without yarns, and then yarns are arranged on the inverted image to obtain a simulation image with the face and back being inverted.

Preferably, the simulation device is further provided with: knitting data storage means for storing the knitting data of the tubular fabric; a monitor for displaying, in parallel, the simulation image in which the face and back of the tube are inverted and a simulation image in which the face and back of the tube are not inverted; a manual input for accessing either one of the simulation images on the monitor to change a design of the tubular fabric; and means for changing the knitting data in accordance with the change in the design performed by the manual input, wherein the monitor displays the simulation image in which the face and back are inverted and the simulation image in which the face and back are not inverted, on the basis of the changed knitting data.
Preferably, the simulation device is further provided with detection means for detecting a part in which the length of a floating yarn position of the tubular fabric exceeds a predetermined value, wherein the part in which the length of the floating yarn position exceeds the predetermined value is displayed on the simulation image in which the face and back of the tube are inverted.

The present invention is also a method for simulating a tubular fabric comprising a plurality of stitches and a front fabric and a rear fabric having at least types of face/back stitches, an upper/lower relation between overlapping stitches, and connection relation between the stitches, the method being provided with: a stitch attribute inverting step of inverting the types of the stitches and the upper/lower relation of the stitches with respect to each of the front and rear fabrics; a step of right/left inverting positions of the stitches along a vertical centerline of the tubular fabric in a width direction, with respect to each of the front and rear fabrics; a step of right/left inverting the connection relation between the stitches with respect to each of the front and rear fabrics; and a step of generating a simulation image of the tubular fabric for an allocation of the stitches obtained by inverting a face and a back of the tube after these inversions.
Preferably, the positions, types, upper/lower relation and right/left connection relation of the stitches are electronically stored, stored values of the types and upper/lower relation of the stitches are inverted in the stitch attribute inverting step, and stored values of the right/left connection relation between the stitches are inverted in the step of right/left inverting the connection relation between the stitches.

The present invention is also a program for simulating a tubular fabric comprising a plurality of stitches and a front fabric and a rear fabric having at least types of face/back stitches, an upper/lower relation between overlapping stitches, and connection relation between the stitches, the method being provided with: a stitch attribute inversion instruction for inverting the types of the stitches and the upper/lower relation of the stitches with respect to each of the front and rear fabrics; a right/left position inversion instruction for mirror inverting positions of the stitches along a vertical centerline of the tubular fabric in a width direction, with respect to each of the front and rear fabrics; a connection relation inversion instruction for right/left inverting the connection relation between the stitches with respect to each of the front and rear fabrics; and a simulation instruction for generating a simulation image of the tubular fabric for an allocation of the stitches obtained by inverting a face and a back of the tube after these inversions.
Preferably, the simulation program is further provided with a storage instruction for storing the positions, types, upper/lower relation and right/left connection relation of the stitches, wherein the stitch attribute inversion instruction inverts stored data on the types and upper/lower relation of the stitches, and the connection relation inversion instruction inverts the right/left connection relation.

The description about the simulation device on this specification directly corresponds to the simulation method and simulation program, unless otherwise specified. On the other hand, the description about the simulation method corresponds to the simulation device and simulation program, unless otherwise specified.
In this specification, the course direction of the fabric is referred to as "right/left direction" or "width direction," and the wale direction perpendicular to a course "vertical direction."

In this invention, inverting the types and vertical direction of the stitches converts a state in which the fabric is viewed from the front to a state in which the fabric is viewed from the back, and inverting the stitch position along the centerline of the width direction of the fabric moves the stitches to the positions of stitches obtained when inverting the front and back of the tubular fabric. Right/left rotating the connection relation between the stitches brings a connection direction between right and left stitches into a state in which the face back of the tubular fabric are inverted. Through the above operations, an arrangement of stitches of which face and back are inverted and the connection relation between the stitches can be obtained. By simulating the tubular fabric based on the arrangement and the connection relation, the tubular fabric of which face and back are inverted can be simulated.

When inverting the face and back of the tubular fabric, a simulation image of the tubular fabric of which front and back are not inverted is created with a three-dimensional image, then the simulation image is cut at the borderline between the front fabric and the rear fabric to invert the front/rear relation, and then the cut images of the front and rear fabrics can be reconnected. In this simulation, however, the data on the connecting part between the front and rear fabrics is damaged or deteriorated, making it impossible to simulate the connecting part between the front and rear fabrics.

In addition, the simulation image of the fabric of which front and back are not inverted can be created with a tree-dimensional image, and then the three-dimensional image can be transformed so as to pull the inside of the tube out and especially invert the face and back of a sweater, a dress, a glove, or the like using a human hand. However, it is difficult to move the stitches on the three-dimensional image in the same way that a human hand is used to invert the face and back of the fabric. At least such an algorithm capable of executing this process in real time is not known.

If the face and back of the tubular fabric can be inverted to perform simulation, it becomes possible to check the designs of both the face side and the back side of a reversible fabric, i.e., a fabric that can be worn with either side facing out. Moreover, the condition of a prolongation disposed on the back of a jacquard fabric or intarsia jacquard fabric can be checked, and problems caused when worn can be identified. In addition, the condition of the borderline between the front and rear fabrics can be checked from the back side.

An image in which the face side is simulated and an image in which the back side is simulated are displayed in parallel on the monitor. The tubular fabric can be designed while modifying one of the fabrics and the other one in real time and simultaneously checking the front side and the back side of the tubular fabric.
If the prolongation on the back side is long, fingers might be entangled by it when wearing the tubular fabric. However, such a problem can be solved by detecting a prolongation position of at least a predetermined length and displaying the detected section on a simulation of the back side.

### BRIEF DESCRIPTION OF THE DRAWINGS

FIG. 1 is a block diagram of a knit simulation device of an embodiment;
FIG. 2 is a diagram showing a face/back inverting algorithm according to the embodiment;
FIG. 3 is a schematic diagram showing face/back inversion according to the embodiment;
FIG. 4 is a flowchart showing a simulation algorithm according to the embodiment;
FIG. 5 is a block diagram of a simulation program according to the embodiment;
FIG. 6 is a diagram showing how the stitch attribute between a miss-underneath and a miss-top is inverted according to the embodiment;
FIG. 7 is a diagram showing how upper connection data and lower connection data are inverted according to the embodiment;
FIG. 8 is a schematic diagram showing the necessity of inverting the connection data according to the embodiment;
FIG. 9 is a diagram showing a face/back inversion unit according to a modification;
FIG. 10 is a flowchart showing a simulation algorithm according to the modification;
FIG. 11 is a schematic diagram showing face/back inversion performed according to the modification;
FIG. 12 is a diagram showing a face/back inversion unit according to a second modification;
FIG. 13 is a flowchart showing a simulation algorithm according to the second modification;
FIG. 14 is a diagram showing face and back two simulation images of a garment according to the embodiment;
FIG. 15 is a diagram showing face and back two simulation images of a glove according to the embodiment;
FIG. 16 is a schematic diagram showing how two images, the face and back, are displayed and data is changed, according to the embodiment; and
FIG. 17 is a flowchart showing an algorithm for checking a prolongation according to the embodiment.

### EXPLANATION OF REFERENCE NUMERALS

- 2: Knit simulation device
- 4: Bus
- 6: Stylus
- 8: Color monitor
- 10: Keyboard
- 12: Disk drive
- 14: LAN interface
- 16: Color printer
- 18: Library
- 20: Tool storage unit
- 22: Back checking unit
- 24: Knitting data storage unit
- 26, 28: Three-dimensional simulation image storage unit
- 30: Face/back inversion unit
- 31: Stitch attribute inversion unit
- 32: Mirror inversion unit
- 33: Knit course and knit connection data inversion unit
- 35: Three-dimensional simulation unit
- 36: Initial allocation unit
- 37: Smoothing unit
- 38: Yarn string data creation unit
- 39: Yarn mapping unit
- 40: Tubular fabric
- 41: Front fabric
- 42: Rear fabric
- 43: Mark
- 44: Central axis
- 50: Simulation program
- 51: Face/back inversion instruction
- 52: Simulation instruction
- 54: Stitch attribute inversion instruction
- 55: Mirror inversion instruction
- 56: Knitting course attribute inversion instruction
- 57: Connection data inversion instruction
- 58: Initial allocation instruction
- 59: Smoothing instruction
- 60: Yarn string data creation instruction
- 61: Yarn mapping instruction
- 62: Miss stitch
- 63: Stitch
- 70 to 72: Stitch
- 80, 81: Stitch
- 90: Face/back inversion unit
- 92: Front/rear inversion unit
- 93: 180° rotating unit
- 94: Front/rear attribute re-inversion unit
- 120: Face/back inversion unit
- 121: Knit position inversion unit
- 122: Knit direction inversion unit
- 130, 130': Tubular garment
- 131, 132: Stitch
- 133: Reference surface
- 140: Simulation image
- 142: Simulation image
- 143: Mirror inversion axis
- 144 to 146: Connecting part
- 150: Simulation image
- 152: Simulation image
- 153: Mirror inversion axis
- 154: Prolongation
- 160, 165: Display
- 162, 166: Face side display
- 163, 167: Back side display

### BEST MODE FOR CARRYING OUT THE INVENTION

The best mode for carrying out the present invention is described hereinafter, but the present invention is not limited to this best mode.

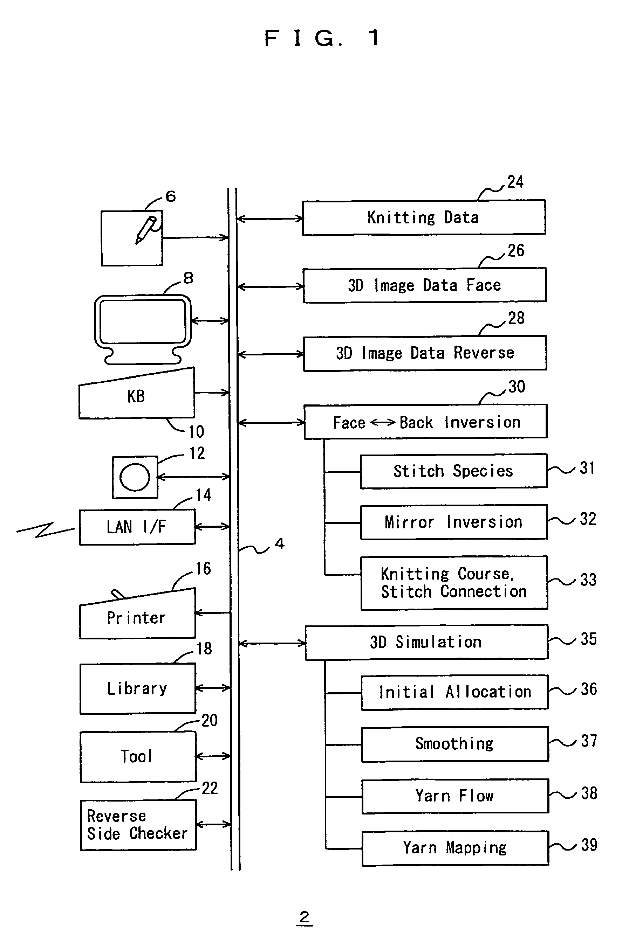

FIGS. 1 to 17 show a simulation of a tubular fabric according to an embodiment. In FIG. 1 and the like, reference numeral 2 represents a knit simulation device, 4 a bus, and 6 a stylus, which is used for manually inputting image data. A color monitor 8 displays knit design data and a loop simulation image, and manual input is performed by using a keyboard 10 or a mouse that is not shown. A stitch or an area of stitches is specified on the image shown on the color monitor 8 by using the stylus 6, and then the knit design data is input. The knit design data is obtained by converting design data into data used for knitting a fabric by means of a knitting machine. In addition, the knitting data can be corrected by correcting the loop simulation image displayed on the color monitor 8 by using the stylus 6.

Reference numeral 12 represents a disk drive to which the knitting data, loop simulation data, stitches, or image data of yarns is input/output, and similarly the knitting data or loop simulation data is input/output to a LAN interface 14 as well. A color printer 16 is for color-printing the loop simulation image, and a library 18 is for storing a library such as the knitting data. A tool storage unit 20 stores a tool for converting the data corrected by a user into the color monitor 8 by means of the stylus 6, to correct the knitting data. The tool storage unit 20 also stores a tool for converting corrected knitting data obtained by correcting the loop simulation image using the stylus 6. A back checking unit 22 is used for checking the length of a prolongation, that is, a yarn floating part, on the simulation image of the back side of the tubular fabric, and then detecting that the prolongation is of at least a predetermined length, and displaying and warning the part on the simulation image of the back side.

A knitting data storage unit 24 stores knitting data of the tubular fabric. In the knitting data of the tubular fabric, the attributes of the front fabric and rear fabric are stored as body attributes with respect to each stitch, and the body attributes are used for distinguishing the front fabric from the rear fabric. The type of each stitch is specified by a front knit (face stitch)/rear knit (back stitch), and the attribute of upper and lower overlapping stitches is stored as the attribute of cross top/cross underneath, miss-top/miss-underneath, or overlapping stitch top/overlapping stitch underneath. Although all of the stitches have attributes regarding the types of the stitches, only relevant stitches have the attributes regarding the upper and lower stitches. The attributes of the types of the stitches and the attributes of the upper and lower stitches are called "stitch attributes." When three or more types of stitches are overlapped, the attributes of the upper and lower stitches are three or more types of the overlapping stitch top/overlapping stitch middle/overlapping stitch underneath.

Positions of stitches of the fabric are stored as connection information. Each stitch stores, as the connection information, a stitch number continuing to the upper side, a stitch number continuing to the lower side, a stitch number continuing to the right-hand side, and a stitch number continuing to the left side. The positional relation between stitches is defined by the connection information. When simulation is started based on the knitting data, the position of a stitch in a three-dimensional or two-dimensional space may be stored as information other than the connection information. The lower connection relation of a stitch that is shifted to the right-hand side by two pitches (two stitches) is a stitch that is positioned two pitches away to the left side below the course. For example, the lower connection information of a stitch that latches two stitches below the course includes a stitch number of the two stitches. The connection between the front and rear fabrics is defined by the connection information on the right and left end stitches of the fabrics. For example, when cyclically knitting the tubular fabric, a stitch number of the rear fabric is specified as a right connection stitch at the right end stitch of the front fabric. Furthermore, a stitch number of the rear fabric is specified as a left connection stitch at the left end stitch of the front fabric.

In addition, the knitting data includes the attribute of knitting course directions such as the right direction knitting (right knitting) and left direction knitting (left knitting), and the data on both ends of each knitting course has a knitting number of the knitting course right end and a knitting number of the knitting course left end. For example, each stitch or a row of stitches has the knitting course attribute of right knitting/left knitting, and the stitches on both ends of the knitting course have the attribute of right/left end. Note that "right and left" described in the present specification corresponds to "right and left" of the tubular fabric when viewed from its front and back (surface on the rear side). Therefore, "right and left" of the tubular fabric when viewed from its back thereof is opposite of "right and left" described in the present specification. The reason that the right-hand side and the left-hand side are defined as described above is to define them for one who views at least one pair of front and back needle beds of a flat knitting machine when knitting.

Reference numerals 26, 28 represent three-dimensional simulation image storage units. The storage unit 26 stores an image in which the tubular fabric is viewed from its front, namely, an image in which the face and back of the tubular fabric are not inverted. The storage unit 28 stores an image in which the face and back of the tubular fabric are inverted, namely, an image in which the inside of the tube is exposed to the outside. A face/back inversion unit 30 uses the data stored in, for example, the knitting data storage unit 24, to invert the face and back of the tubular fabric. A stitch attribute inversion unit 31 inverts the attributes of the types of a front knit stitch and a rear knit stitch, and also inverts the attributes associated with the cross-top/cross-underneath, miss-top/miss-underneath, overlapping stitch top/overlapping stitch underneath, or other upper and lower stitches. A mirror inversion unit 32 inverts the positions of stitches in a right/left direction along the centerline of the fabric in the right/left direction. Note that "along the centerline of the fabric in the right/left direction" does not literally mean that the line with respect to which the right/left inversion is performed is not in the center of the right/left direction. For example, a reference line parallel to the course direction of the fabric may be formed outside the fabric to perform mirror inversion, and then the position of a stitch may be shifted horizontally in parallel.

A knitting course and stitch connection data inversion unit 33 inverts the right knitting/left knitting attributes of the knitting course attribute and the knitting course right/left end attributes. Similarly, in order to invert the right/left connection relation on the basis of the connection information, the stitch number of the right connection is assigned to the stitch number of the left connection, and the stitch number of the left connection is assigned to the stitch number of the right connection. When the right and left shifting is included in the data on the upper/lower connection stitches, the direction of the shift is inverted. For example, a lower right connection loop is inverted to a lower left connection loop. When the direction of shifting cannot be included in the upper/lower connection data, it is not necessary to perform the right/left inversion on the upper connection or lower connection.

At three-dimensional simulation unit 35 generates a three-dimensional image of the front surface side of the tubular fabric by using the knitting data. The three-dimensional simulation unit 35 also generates an image by simulating the rear surface side of the tubular fabric on the basis of the knitting data processed by the face/back inversion unit 30. An initial allocation unit 36 initially allocates the position of a stitch on the knitting data to bring it close to the actual position. A smoothing unit 37 smoothes a stitch position and brings it close to the actual stitch position on a knitted fabric or a worn fabric. At the time of smoothing the stitch portion, the smoothing unit 37 also generates a stitch position in a depth direction of the fabric in accordance with asperity of the stitches generated by the types of the face and back stitches, and overlapping stitches. A yarn string data creation unit 38 uses yarn strings to express each stitch and a prolongation between stitches with respect to the position of the smoothed stitch, in accordance with the type of the stitches, top and bottom overlapping stitched and the connection information. A yarn mapping unit 39 maps an image of a yarn on the yarn strings. Three-dimensional simulation images of the front and rear sides of the tubular fabric can be obtained in a manner described above. Note that the simulation may be performed two-dimensionally instead of three-dimensionally, but two-dimensional simulation of the borderline between the front and rear fabrics cannot be performed completely.

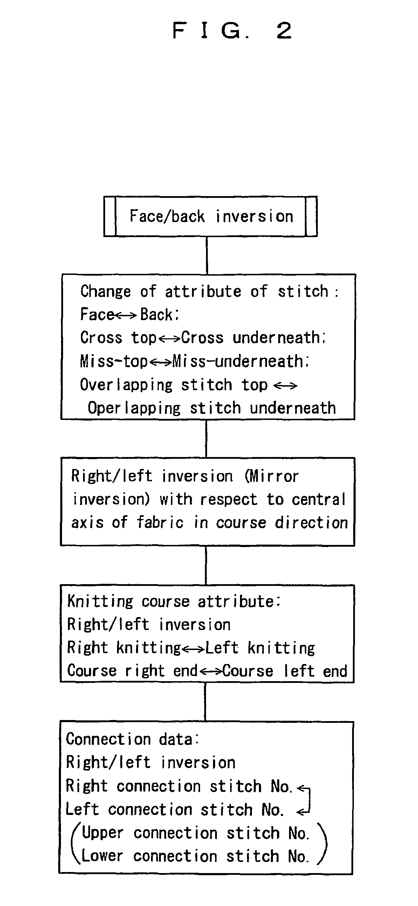

FIG. 2 shows a face/back inverting algorithm. The stitch attribute is changed to switch between a front stitch and a back stitch, and the cross-top and cross-underneath are switched when stitches cross each other. A miss-top and a miss-underneath are switched to switch between an overlapping stitch top and an overlapping stitch underneath. Next, the positions of the stitches are right/left inverted along the central axis of the fabric in the course direction. This inversion is called "mirror inversion." In addition, the knitting course attribute is inverted to switch between the right knitting and left knitting and between the course right end and the course left end. Then, the connection data of the stitch is right/left inverted. Note that the upper connection stitch number and the lower connection stitch number that do not include the right and left attributes are not inverted.

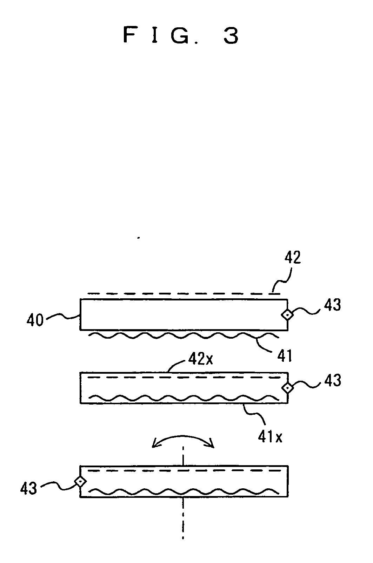

FIG. 3 schematically shows a processing performed up to the mirror inversion in the face/back inversion. A tubular fabric 40 has a front fabric 41 and a rear fabric 42. Reference numeral 43 represents a mark indicating a borderline position between the front and rear fabrics. By inverting the stitch attribute, the front and rear fabrics 41, 42 are inverted and become fabrics 41x, 42x. When mirror inversion is performed at this point, the stitch is moved symmetrically. When the knitting course attribute is inverted to invert the knitting course and the right/left connection relation is inverted, the position and attribute of the stitch, the connection relation between the stitches, and the direction of the knitting course are defined in accordance with the state in which the tubular fabric is face/back inverted. Because the knitting course attribute is not reflected on the three-dimensional simulation image of the fabric, the knitting course attribute may not be inverted.

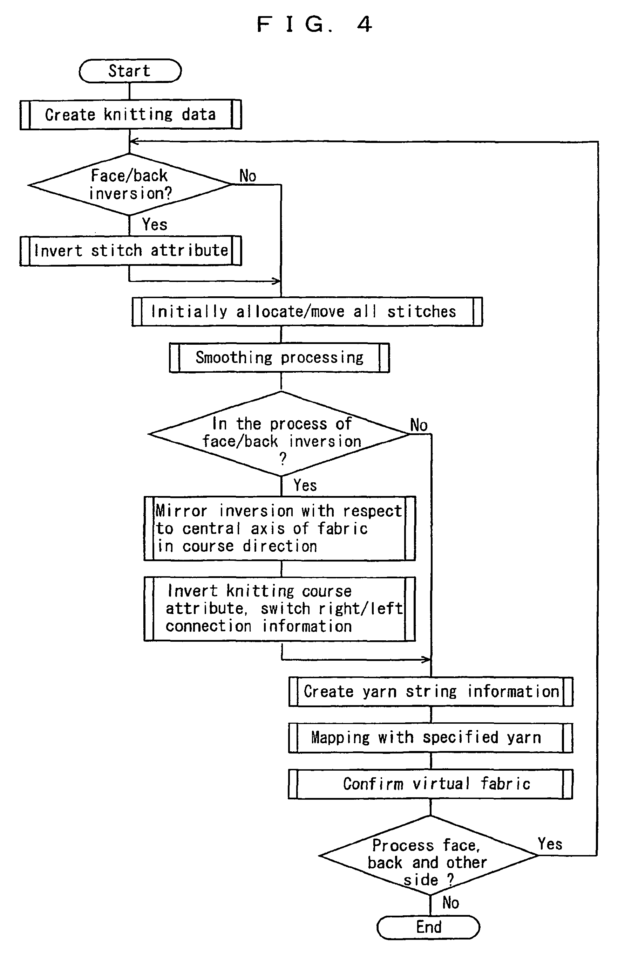

FIG. 4 shows a three-dimensional loop simulation algorithm of the tubular fabric. The knitting data is created, and all stitches are initially allocated when performing simulation before inverting the face/back fabrics, and then the positions of the stitches are smoothed. Yarn string information is created such as to connect the stitches, to map the yarn string using a specified yarn. A three-dimensional loop simulation image can be obtained in a manner described above, and this image is then displayed on the color monitor. When inverting the front and rear fabrics, the stitch attribute is inverted to mirror-invert the fabrics along the central axis of the tubular fabric in the course direction. Then, the knitting course attribute is inverted to switch between the right/left connection information. In FIG. 4, the mirror inversion, knitting course attribute inversion, and right/left connection information inversion are performed after smoothing the positions of the stitches. However, these processings may be executed between the stitch attribute inversion and the initial allocation of all stitches to perform the processings for the face/back inversion at once. Moreover, the stitch attribute inversion, mirror inversion, knitting course attribute inversion, and switching between the right/left connection information may be performed regardless of a specific order.

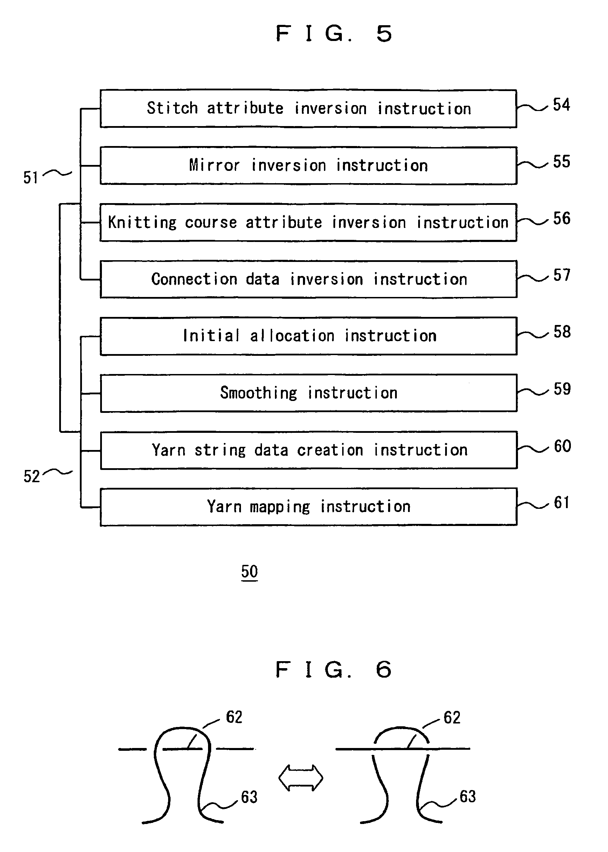

FIG. 5 shows a simulation program 50 of a three-dimensional fabric. Reference numeral 51 represents a face/back inversion instruction of the tubular fabric, and 52 a simulation instruction. A stitch attribute inversion instruction 54 inverts the attributes of the types of the stitches and of the upper/lower relation. A mirror inversion instruction 55 inverts the right and left fabrics. A knitting course attribute inversion instruction 56 inverts the knitting course attributes of the right knitting and left knitting. A connection data inversion instruction 57 inverts the right/left connection data of the right connection and left connection. An initial allocation instruction 58 executes initial allocation of the stitches. A smoothing instruction 59 smoothes the allocation of the stitches. A yarn string data creation instruction 60 creates stitches and yarn string data representing the connection relation between the stitches. A yarn mapping instruction 61 maps an image of the yarn along the yarn string.

FIG. 6 shows the upper/lower relation associated with miss. Reference numeral 62 represents a miss stitch, and 63 a normal stitch. The left-hand side of FIG. 6 shows a miss-underneath in which the miss stitch 62 is positioned underneath, while the right-hand side shows a miss-top in which the miss stitch 62 is positioned on the top. These attributes are applied to, for example, the stitches 62, 63.

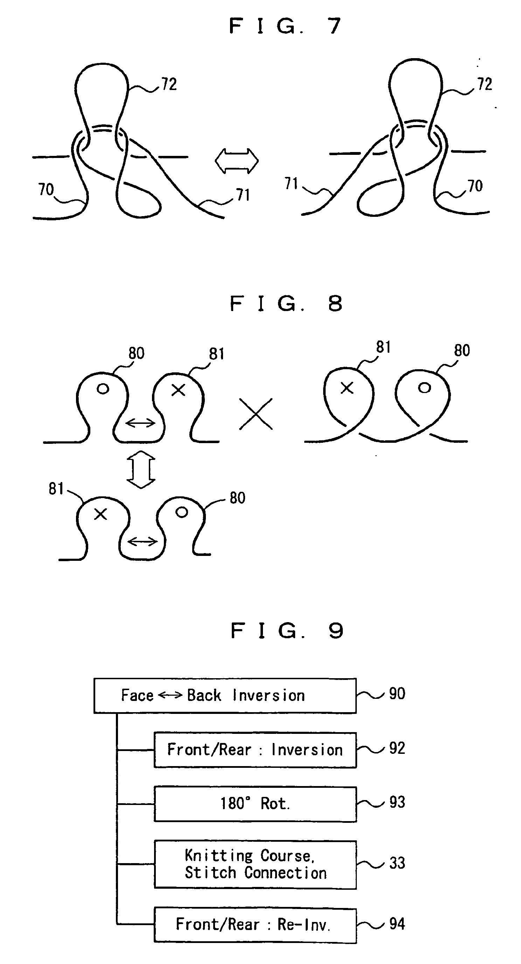

FIG. 7 shows an example of how the connection data is inverted. There are stitches 70, 71 as underneath connection of a stitch 72, 70 being simply an underneath connection stitch, and 71 being a swinging underneath connection stitch. On the left-hand side of FIG. 7, the stitch 71 has a lower-right connection attribute, which is changed to a lower-left connection attribute on the right-hand side of the figure.

FIG. 8 shows a right/left connection between stitches 80, 81. The stitch 81 is a right-hand side connection stitch in relation to the stitch 80, while the stitch 80 is a left connection in relation to the stitch 81. Here, the state on the lower side of FIG. 8 can be obtained by right/left inverting the stitches 80, 81, and the connection relation between the stitches can be maintained properly by inverting the right/left connection relation. On the other hand, the stitches 80, 81 are connected as shown on the right-hand side of FIG. 8 when the right/left connection relation is not inverted. Such a connection shown on the right-hand side of the figure is different from the actual connection, and the fact that such a connection can be obtained is the problem.

FIGS. 9 to 11 show face/back inversion performed in a modification. A face/back inversion unit 90 shown in FIG. 9 corresponds to the face/back inversion unit 30 shown in FIG. 1, and a front/rear inversion unit 92 inverts the attributes of the front body fabric and the rear body fabric. A 180° rotating unit 93 rotates the tubular fabric 180° around its central axis. The knitting course and stitch connection data inversion unit 33 inverts the direction of the knitting course, the right and left ends, and the connection data of the right and left stitches, as in the same manner shown in FIG. 1. A front/rear attribute re-inversion unit 94 switches the attributes of the front and rear fabrics in response to the relation between the front and rear fabrics that are inverted as a result of the 180°-rotation of the tubular fabric. Note that the front/rear attribute re-inversion unit 94 is not required when only loop simulation is performed.

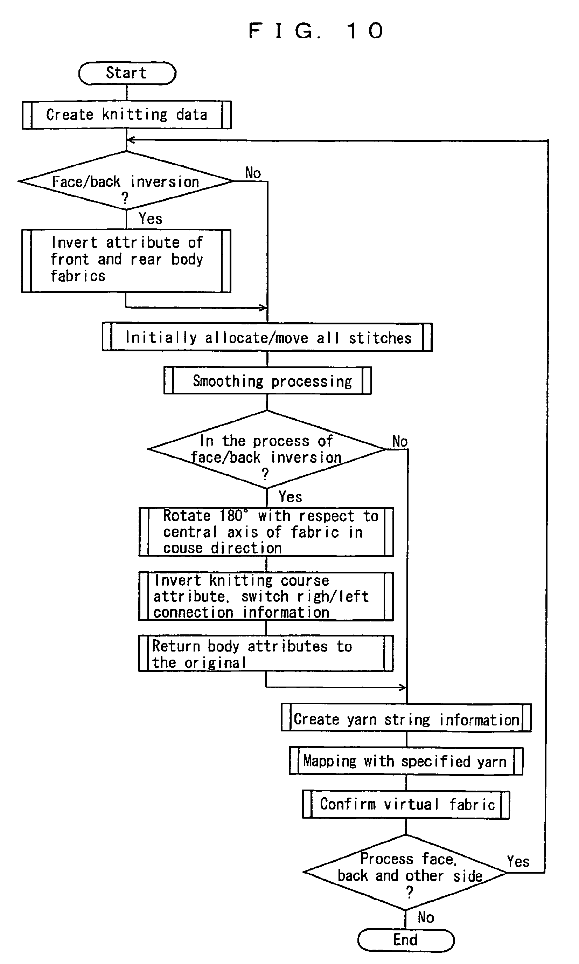

FIG. 10 shows a loop simulation algorithm that is executed when the face/back inversion unit 90 of the modification shown in FIG. 9 is used, wherein the attributes of the front fabric and the rear fabric are inverted when the face/back inversion is performed. For example, the tubular fabric is rotated 180° around the its central axis after the initial allocation and smoothing of the stitches, and then the knitting course attributes and the right/left connection information are inverted. Thereafter, the front body fabric and the rear body fabric are returned to the original positions. The rest are the same as those of the algorithm shown in FIG. 4.

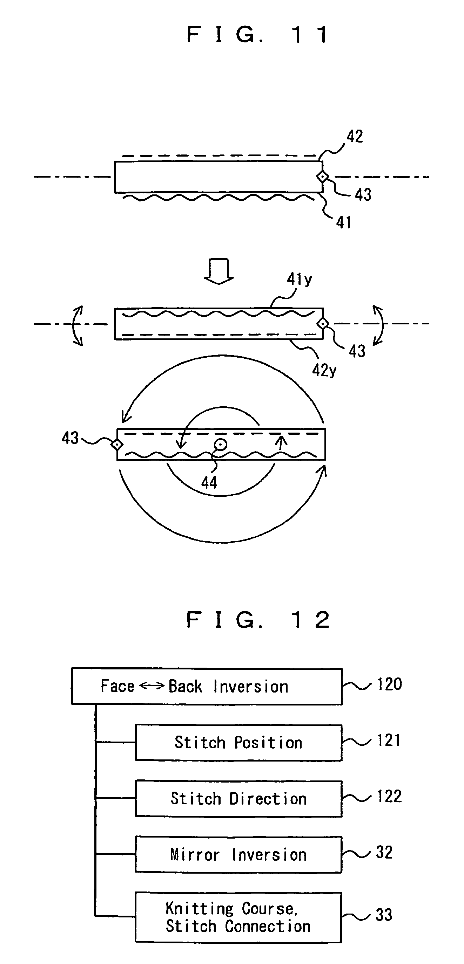

FIG. 11 schematically shows the face/back inversion performed in the modification. Suppose that the front fabric 41 has to be placed in front of the rear fabric 42 as viewed from the front. Switching the attributes of the front fabric and the rear fabric changes the data as shown in the middle drawing of FIG. 11. Next, the fabrics are rotated 180° around a central axis 44 to obtain the state shown in the bottom drawing of FIG. 11. As a result, the positions and types of the stitches and the overlapping relation are changed, and thereafter the direction of the knitting course and the right/left connection relation are inverted. The step of returning the body attributes to the original positions as described in FIG. 10 is not a substantive processing but is merely a processing for correcting the attributes in response to the 180°-rotation of the tubular fabric.

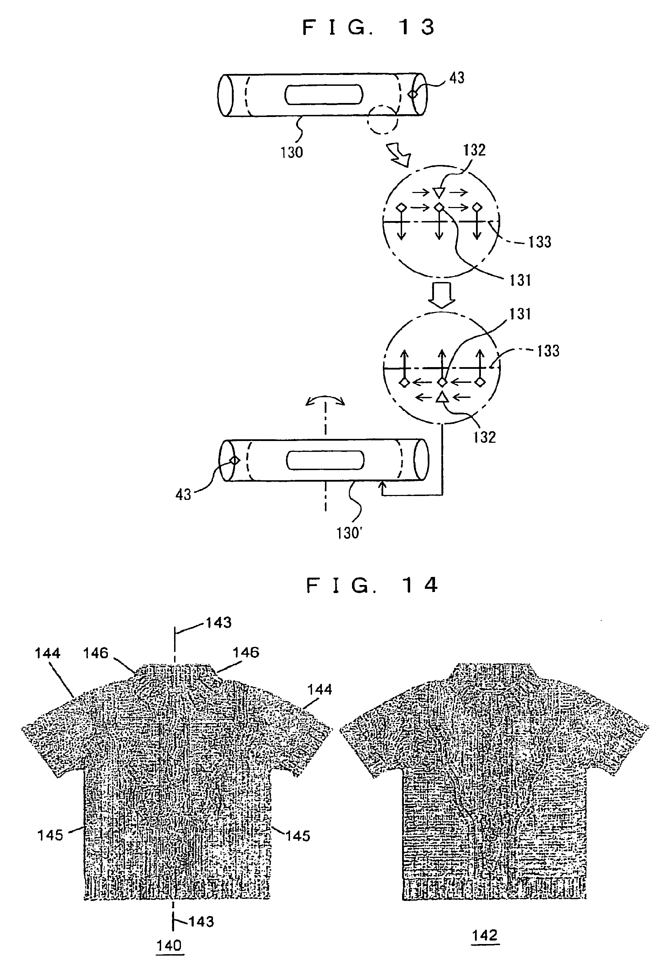

FIGS. 12 and 13 show the face/back inversion performed in a second modification. A face/back inversion unit 120 shown in FIG. 12 inverts the positions of the stitches with respect to a virtual reference surface that passes through the vicinity of the fabric at a stitch position inversion unit 121. Consequently, the relation in which the upper and lower stitches are overlapped can be inverted. A stitch direction inversion unit 122 inverts the direction of a stitch. In the direction of the stitch, a face stitch is +, a back stitch is -, and a miss has no value. Inverting the stitch direction switches the types of the stitches. Next, the mirror inversion unit 32 mirror-inverts the stitch positions along the central axis in the course direction, and the knitting course and knitting connection data inversion unit 33 right/left inverts the direction of the knitting course and the direction of the connection, whereby the face/back inversion can be executed.

FIG. 13 schematically shows the processing shown in FIG. 12, wherein stitch positions 131, 132 are inverted with respect to an appropriate reference surface 133 disposed parallel to the front and rear fabrics of a tubular garment 130. In addition, stitch directions that are shown by the vertical arrows in FIG. 13 are inverted. The stitch 132 is a miss stitch and has no direction. In addition, the direction of the knitting course and the right and left ends of the course are switched, and further the right/left connection information shown by the horizontal arrows in FIG. 13 are switched. As a result, a tubular garment 130' in which the face and back of the fabric are inverted can be obtained.

In FIG. 14, a simulation image 142 is obtained by face/back inverting a simulation image 140 of a sweater. Reference numeral 143 represents a mirror inversion axis, and 144 to 146 connecting parts between the front and rear fabrics. The inventor has considered virtually cutting the front and rear fabrics along the connecting parts 144 to 146 when the three-dimensional simulation image 140 is initially obtained, then invert the face and back and thereafter reconnect the front and rear fabrics. However, it is difficult to simulate the connecting parts 144 to 146 accurately. Moreover, the inventor has considered operating the simulation image 140 such as to put a hand of a human into the image to invert the face and back thereof. However, the inventor could not discover an algorithm with which this operation can be executed in real time.

The sweater shown in FIG. 14 has a design which can be worn with either side facing out. When displaying the simulation images 140, 142 in parallel on the color monitor 8, the design of the both face and back of the sweater can be seen. This is important in a design of a reversible garment or massage underwear having an important back side or a design of a jacquard in which the condition of a prolongation can be good merchantable quality. Moreover, connections between the front and rear fabrics and the conditions of yarns on the back of the tubular fabric can be observed from the image 142.

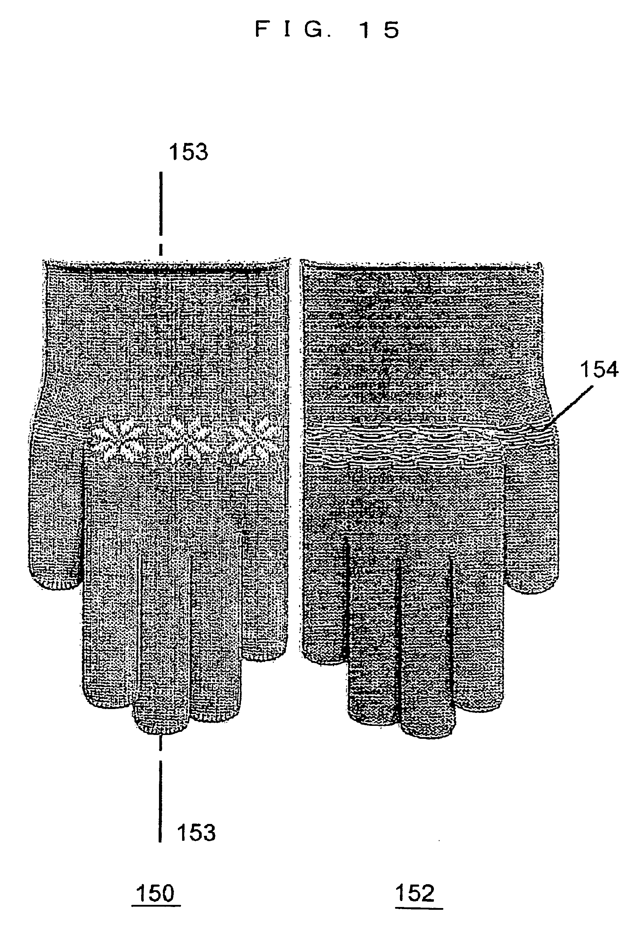

FIG. 15 shows simulation images 150, 152 of the face and back of a glove. Reference numeral 153 represents a mirror inversion axis, and 154 a prolongation. Regardless of the glove, if the prolongation 154 is long, then fingers might be entangled by the prolongation when wearing the glove. The length of the prolongation can be seen from the image 152. Note that the sweater shown in FIG. 14 has a part in which a yarn runs across the back of the fabric in the design of a jacquard or an intarsia jacquard. In this case as well, the length of the prolongation can be confirmed from the image of the back of the fabric.

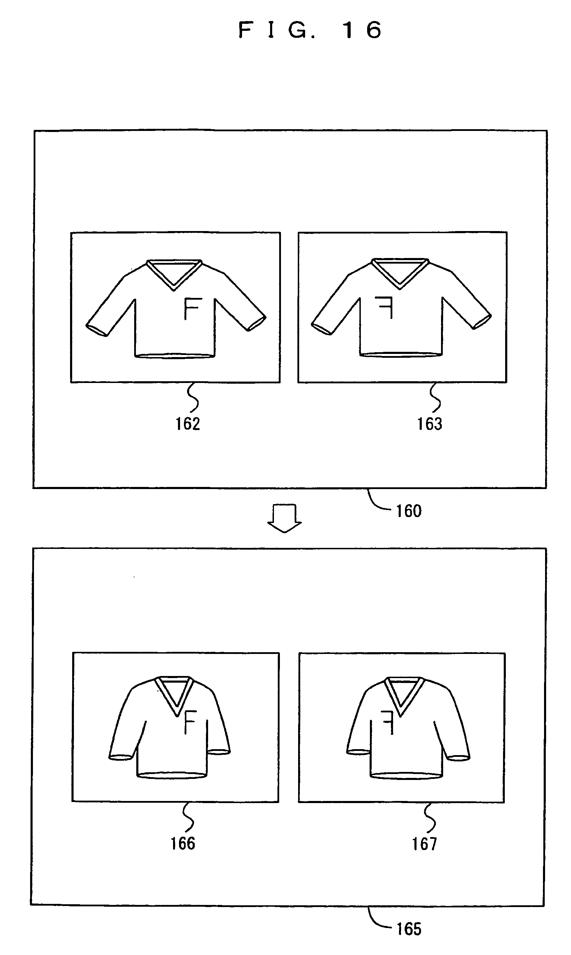

FIG. 16 schematically shows how the images of the face and back of the fabric are displayed on the color monitor 8. A display 160 displays a face side display 162 and a back side display 163 of the tubular fabric in parallel. By correcting these designs using the stylus 6, the knitting data is changed and the loop simulation images of the face and back with respect to the corrected designs are recreated. Then, new face and back side displays 166, 167 are displayed in parallel.

For example, suppose that the designs are changed with respect to the face side display 162 shown in FIG. 16. The displays 166, 167 are generated using the algorithm shown in FIG. 4, on the basis of the changed designs. When the designs are changed with respect to the back side display 163, the change in the designs may be interpreted and taken as it being subjected to the face side display 162. Alternatively, virtual knitting data for the back side display 163, which is created using the face/back inversion algorithm shown in FIG. 4, may be stored, and the back side display 167 may be generated based on the assumption that this knitting data is corrected. In this case, the face side display 166 is generated using the algorithm shown in FIG. 4 on the basis of the changed knitting data for the back side display.

When the user rotates the face side display 162 to the right or left, the back side display 163 is also rotated in the opposite direction. When the back side display 163 is rotated to the right or left, the face side display 162 is rotated to the opposite direction. As a result, the face side display 162 and the back side display 163 are placed respectively in two positions symmetric with respect to the central axis of the tubular fabric. When either the face side display 162 and the back side display 163 is zoomed with respect to the position specified by the user, the other display is also zoomed with respect to a target position on a surface between the face side display 162 and the back side display 163.

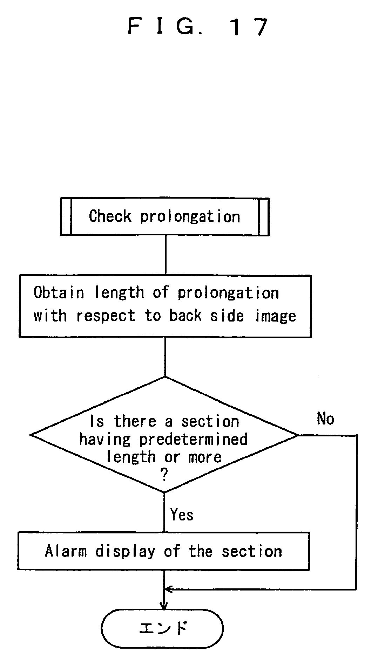

FIG. 17 shows an algorithm for checking the length of the prolongation. The length of the prolongation is obtained on the back side image, and then the color of a section with a predetermined length or more is changed or a mark is placed around the periphery of this section to display an alarm.

The following effects can be achieved in the embodiment.
(1) The back of the tubular fabric can be simulated.
(2) Simulation can be performed without omitting the information on the connecting part between the front and rear fabrics of the tubular fabric.
(3) The tubular fabric can be designed easily due to the above effects, and especially the design or problems of the back side can be checked. For example, the presence of a long prolongation (yarn floating part) can be checked.
(4) The face and back simulation images are displayed in parallel, and the face and back of the tubular fabric ca be checked and designed simultaneously in real time such that one of the face and back of the fabric is corrected when the other one is corrected.

## Claims

1. A simulation device (2) of a tubular fabric for simulating a tubular fabric (40) comprising a plurality of stitches and a front fabric (41) and a rear fabric (42) having at least types of face/back stitches, an upper/lower relation between overlapping stitches, and connection relation between the stitches, **characterized in that** the device (2) comprises:
stitch attribute inverting means (31) for inverting the types of the stitches and the upper/lower relation of the stitches of the tubular fabric (40) with respect to each of the front and rear fabrics (41, 42);
right/left position inverting means (32) for mirror inverting positions of the stitches along a vertical centerline of the tubular fabric (40) in a width direction, with respect to each of the front and rear fabrics (41, 42);
connection relation inverting means (33) for right/left inverting the connection relation between the stitches with respect to each of the front and rear fabrics (41, 42); and
simulation means for generating a simulation image of the tubular fabric (40) for an allocation of the stitches obtained by inverting a face and a back of the tube after these inversions.

2. The simulation device (2) of a tubular fabric according to claim 1, further comprising storage means for storing the positions, types, upper/lower relation and right/left connection relation of the stitches on each fabric.

3. The simulation device (2) of a tubular fabric according to claim 1, further comprising:
knitting data storage means for storing the knitting data of the tubular fabric (40);
a monitor (8) for displaying, in parallel, the simulation image (142, 152) in which the face and back of the tube are inverted and a simulation image (140, 150) in which the face and back of the tube are not inverted;
a manual input for accessing either one of the simulation images (140, 142, 150, 152) on the monitor to change a design of the tubular fabric (40); and
means for changing the knitting data in accordance with the change in the design performed by the manual input,
the monitor 8 displaying the simulation image (142, 152) in which the face and back are inverted and the simulation image (140, 150) in which the face and back are not inverted, on the basis of the changed knitting data.

4. The simulation device (2) of a tubular fabric according to claim 1, further comprising detection means for detecting a part in which the length of a floating yarn portion (154) of the tubular fabric (40) exceeds a predetermined value, the part in which the length of the floating yarn portion (154) exceeds the predetermined value being displayed on the simulation image (142, 152) in which the face and back of the tube are inverted.

5. A simulation device (2) of a tubular fabric for simulating a tubular fabric (40) comprising a plurality of stitches and a front fabric (41) and a rear fabric (42) having at least types of face/back stitches, an upper/lower relation between overlapping stitches, and connection relation between the stitches, **characterized in that** the device (2) comprises:
a front/rear inversion unit (92) for inverting the types of the stitches and the upper/lower relation between the stitches by switching the front fabric (41) and the rear fabric (42),
a 180° rotating unit (93) for rotating the tubular fabric (40) 180° around its central axis.;
connection relation inverting means (33) for right/left inverting the connection relation between the stitches with respect to each of the front and rear fabrics (41, 42); and
simulation means for generating a simulation image of the tubular fabric (40) for an allocation of the stitches obtained by inverting a face and a back of the tube after these inversions.

6. A simulation method of a tubular fabric for simulating a tubular fabric (40) comprising a plurality of stitches and a front fabric (41) and a rear fabric (42) having at least types of face/back stitches, an upper/lower relation between overlapping stitches, and connection relation between the stitches, **characterized in that** the method comprises:
a stitch attribute inverting step of inverting the types of the stitches and the upper/lower relation of the stitches with respect to each of the front and rear fabrics (41, 42);
a step of mirror inverting positions of the stitches along a vertical centerline of the tubular fabric (40) in a width direction, with respect to each of the front and rear fabrics (41, 42); and
a step of right/left inverting the connection relation between the stitches with respect to each of the front and rear fabrics (41, 42); and
a step of generating a simulation image of the tubular fabric (40) for an allocation of the stitches obtained by inverting a face and a back of the tube after these inversions.

7. The simulation method of a tubular fabric according to claim 6, **characterized in that** the positions, types, upper/lower relation and right/left connection relation of the stitches are electronically stored.

8. A simulation program (50) of a tubular fabric for simulating a tubular fabric (40) comprising a plurality of stitches and a front fabric (41) and a rear fabric (42) having at least types of face/back stitches, an upper/lower relation between overlapping stitches, and connection relation between the stitches, **characterized in that** the program (50) comprises:
a stitch attribute inversion instruction (54) for inverting the types of the stitches and the upper/lower relation of the stitches with respect to each of the front and rear fabrics (41, 42);
a right/left position inversion instruction for mirror inverting positions of the stitches along a vertical centerline of the tubular fabric (40) in a width direction, with respect to each of the front and rear fabrics (41, 42);
a connection relation inversion instruction for right/left inverting the connection relation between the stitches with respect to each of the front and rear fabrics (41, 42); and
a simulation instruction (52) for generating a simulation image of the tubular fabric (40) for an allocation of the stitches obtained by inverting a face and a back of the tube after these inversions.

9. The simulation program (50) of a tubular fabric according to claim 8, further comprising a storage instruction for storing the positions, types, upper/lower relation and right/left connection relation of the stitches.

## Patentansprüche

1. Simulationsvorrichtung (2) für Schlauchware, zum Simulieren einer Schlauchware (40) mit einer Vielzahl von Stichen und einem vorderen Gestrick (41) und einem hinteren Gestrick (42) umfassend wenigstens Typen von Vorder-/Rückseiten-Maschen, einer oberen/unteren Beziehung zwischen überlappenden Maschen und Verbindungsbeziehungen zwischen den Maschen, **dadurch gekennzeichnet, dass** die Vorrichtung (2) folgendes aufweist:
Maschenattribut-Invertierungseinrichtung (31) zum Invertieren der Maschentypen und der oberen/unteren Beziehung der Maschen der Schlauchware (40) bezüglich jedem der vorderen und hinteren Gestricke (41, 42);
Rechts/Links-Invertierungseinrichtung (32) zum Spiegelinvertieren der Position der Maschen entlang einer vertikalen Mittellinie der Schlauchware (40) in Breitenrichtung bezüglich jedem der vorderen und hinteren Gestricke (41, 42);
Verbindungsbeziehungs-Invertierungseinrichtung (33) zum Rechts/Links-Invertieren der Verbindungsbeziehung zwischen den Maschen bezüglich jedem der vorderen und hinteren Gestricke (41, 42); und
Simulationseinrichtung zum Erzeugen eines Simulationsbilds der Schlauchware (40) für eine Zuordnung der Maschen, die bei Invertierung von Vorn und von Hinten des Schlauchs nach diesen Inversionen erhalten werden.

2. Simulationsvorrichtung (2) für Schlauchware nach Anspruch 1, weiterhin umfassend Speichereinrichtungen zum Speichern der Positionen, der Typen, der oberen/unteren Beziehung und der Rechts/Links-Verbindungsbeziehungen der Stiche auf jedem Gestrick.

3. Simulationsvorrichtung (2) für Schlauchware nach Anspruch 1, weiterhin umfassend:
Strickdaten-Speichereinrichtungen zum Speichern der Strickdaten der Schlauchware;
einen Monitor (8) zum parallelen Darstellen des Simulationsbilds (142, 152), in dem Vorn und Hinten des Schlauches invertiert sind, und eines Simulationsbildes (140, 150), in dem Vorn und Hinten des Schlauches nicht invertiert sind;
eine manuelle Eingabe zum Bewerten eines der Simulationsbilder (140, 142, 150, 152) auf dem Monitor, um ein Design der Schlauchware (40) zu ändern; und
Einrichtungen zum Ändern der Strickdaten entsprechend der Änderung im Design, das durch die manuelle Eingabe vorgenommen wurde,
wobei der Monitor (8) das Simulationsbild (142, 152) in dem Vorn und Hinten invertiert sind sowie das Simulationsbild (140, 150), in dem Vorn und Hinten nicht invertiert ist, auf der Basis der geänderten Strickdaten wiedergibt.

4. Simulationsvorrichtung (2) für Schlauchware nach Anspruch 1, weiterhin umfassend Detektionseinrichtungen zum Detektieren eines Bereichs, in dem die Länge eines floatenden Garnteils (154) der Schlauchware (40) einen vorgegebenen Wert übersteigt, wobei der Bereich, in dem die Länge des floatenden Garnteils (154) den vorgegebenen Wert übersteigt, auf dem Simulationsbild (142, 152) angezeigt wird, in dem Vorn und Hinten des Schlauches invertiert sind.

5. Simulationsvorrichtung (2) für Schlauchware zum Simulieren einer Schlauchware (40) mit einer Vielzahl von Stichen und einem vorderen Gestrick (41) und einem hinteren Gestrick (42) umfassend wenigstens Typen von Vorder-/Rückseiten-Maschen, einer oberen/unteren Beziehung zwischen überlappenden Maschen und Verbindungsbeziehungen zwischen den Maschen, **dadurch gekennzeichnet, dass** die Vorrichtung (2) folgendes aufweist:
eine Vorder-/Rückseiten-Inversionseinheit (92) zum Invertieren der Maschentypen und der oberen/unteren Beziehung zwischen den Maschen durch Umschalten zwischen dem vorderen Gestrick (41) und dem hinteren Gestrick (42),
eine 180°-Dreheinheit (93) zum Drehen der Schlauchware (40) um 180° um seine Mittelachse;
Verbindungsbeziehungs-Invertierungseinrichtung (33) zum Rechts/Links-Invertieren der Verbindungsbeziehung zwischen den Maschen bezüglich jedem vorderen und hinteren Gestrick (41, 42); und
Simulationseinrichtungen zum Erzeugen eines Simulationsbilds der Schlauchware (40) für eine Zuordnung der Maschen, die bei Invertierung von Vorn und Hinten des Schlauchs nach diesen Inversionen erhalten werden.

6. Simulationsmethode für Schlauchwaren zum Simulieren einer Schlauchware (40) mit einer Vielzahl von Stichen und einem vorderen Gestrick (41) und einem hinteren Gestrick (42) umfassend wenigstens Typen von Vorder-/Rückseiten-Maschen, einer oberen/unteren Beziehung zwischen überlappenden Maschen und Verbindungsbeziehungen zwischen den Maschen, **dadurch gekennzeichnet, dass** das Verfahren folgendes umfasst:
einen Maschenattribut-Invertierungsschritt zum Invertieren der Maschentypen und der oberen/unteren Beziehung der Maschen bezüglich jedem der vorderen und hinteren Gestricke (41, 42);
ein Schritt zum Spiegelinvertieren der Position der Maschen entlang einer vertikalen Mittellinie der Schlauchware (40) in Breitenrichtung bezüglich jedem der vorderen und hinteren Gestricke (41, 42);
ein Schritt zum Rechts/Links-Invertieren der Verbindungsbeziehung zwischen den Maschen bezüglich jedem der vorderen und hinteren Gestricke (41, 42); und
ein Schritt zum Erzeugen eines Simulationsbilds der Schlauchware (40) für eine Zuordnung der Maschen, die bei Invertierung von Vorn und Hinten des Schlauchs nach diesen Inversionen erhalten werden.

7. Simulationsverfahren für eine Schlauchware nach Anspruch 6, **dadurch gekennzeichnet, dass** die Positionen, die Typen, die obere/untere Beziehung und die Rechts/Links-Verbindungsbeziehung der Maschen elektronisch gespeichert werden.

8. Simulationsprogramm (50) für Schlauchware zum Simulieren einer Schlauchware (40) mit einer Vielzahl von Stichen und einem vorderen Gestrick (41) und einem hinteren Gestrick (42) umfassend wenigstens Typen von Vorder-/Rückseiten-Maschen, einer oberen/unteren Beziehung zwischen überlappenden Maschen und Verbindungsbeziehungen zwischen den Maschen, **dadurch gekennzeichnet, dass** das Programm (50) folgendes umfasst:
einen Maschenattribut-Invertierungsbefehl (54) zum Invertieren der Maschentypen und der oberen/unteren Beziehung der Maschen bezüglich von jedem der vorderen und hinteren Gestricke (41, 42);
einen Rechts/Links-Invertierungsbefehl zum Spiegelinvertieren der Position der Maschen entlang einer vertikalen Mittellinie der Schlauchware (40) in Breitenrichtung bezüglich jedem der vorderen und hinteren Gestricke (41, 42);
einen Verbindungsbeziehungs-Invertierungsbefehl zum Rechts/Links-Invertieren der Verbindungsbeziehung zwischen den Maschen bezüglich jedem der vorderen und hinteren Gestricke (41, 42); und
einen Simulationsbefehl zum Erzeugen eines Simulationsbilds der Schlauchware (40) für eine Zuordnung der Maschen, die bei Invertierung von Vorn und von Hinten des Schlauchs nach diesen Inversionen erhalten werden.

9. Simulationsprogramm (50) für Schlauchware nach Anspruch 8 weiterhin umfassend einen Speicherbefehl zum Speichern der Positionen, Typen, oberen/unteren Beziehung und Rechts/Linksverbindungs-Beziehung der Maschen.

## Revendications

1. Dispositif de simulation (2) d'un tissu tubulaire pour simuler un tissu tubulaire (40) comprenant une pluralité de mailles et un tissu avant (41) et un tissu arrière (42) comportant au moins des types de mailles de devant/de derrière, et une relation supérieure/inférieure entre des mailles se chevauchant, et une relation de connexion entre les mailles, **caractérisé en ce que** le dispositif (2) comprend :
des moyens d'inversion d'attributs de mailles (31) pour inverser le type des mailles et la relation inférieure/supérieure entre les mailles du tissu tubulaire (40) en ce qui concerne chacun des tissus avant et arrière (41, 42) ;
des moyens d'inversion de position droite/gauche (32) pour inverser par symétrie des positions des mailles le long d'une ligne centrale verticale du tissu tubulaire (40) dans la direction de la largeur, en ce qui concerne chacun des tissus avant et arrière (41, 42) ;
des moyens d'inversion de relation de connexion (33) pour une inversion de la relation droite/gauche de connexion entre les mailles en ce qui concerne chacun des tissus avant et arrière (41, 42) ; et
des moyens de simulation pour générer une image de simulation du tissu tubulaire (40) pour une allocation des mailles, obtenue en inversant le devant et le derrière du tube après ces inversions.

2. Dispositif de simulation (2) d'un tissu tubulaire selon la revendication 1, comprenant en outre des moyens de mémorisation pour mémoriser les positions, les types, la relation supérieure/inférieure et la relation de connexion droite/gauche des mailles sur chaque tissu.

3. Dispositif de simulation (2) d'un tissu tubulaire selon la revendication 1, comprenant en outre :
des moyens de mémorisation de données de tricotage pour mémoriser les données de tricotage du tissu tubulaire (40) ;
un moniteur (8) pour afficher, en parallèle, l'image de simulation (142, 152) dans laquelle le devant et le derrière du tube sont inversés et une image de simulation (140, 150) dans laquelle le devant et le derrière du tube ne sont pas inversés ;
une entrée manuelle pour accéder à l'une ou l'autre des images de simulation (140, 142, 150, 152) sur le moniteur pour modifier la conception du tissu tubulaire (40) ; et
des moyens pour modifier les données de tricotage conformément à la modification dans la conception réalisée par l'entrée manuelle,
le moniteur 8 affichant l'image de simulation (142, 152) dans laquelle le devant et le derrière sont inversés et l'image de simulation (140, 150) dans laquelle le devant et le derrière ne sont pas inversés, sur la base des données de tricotage modifiées.

4. Dispositif de simulation (2) d'un tissu tubulaire selon la revendication 1, comprenant en outre des moyens de détection pour détecter une partie dans laquelle la longueur d'une portion de fil flottant (154) du tissu tubulaire (40) dépasse une valeur prédéterminée, la partie dans laquelle la longueur de la portion de fil flottant (154) dépasse la valeur prédéterminée étant affichée sur l'image de simulation (142, 152) dans laquelle le devant et le derrière du tube sont inversés.

5. Dispositif de simulation (2) d'un tissu tubulaire pour simuler un tissu tubulaire (40) comprenant une pluralité de mailles et un tissu avant (41) et un tissu arrière (42) comportant au moins des types de mailles de devant/de derrière, une relation supérieure/inférieure entre des mailles se chevauchant, et une relation de connexion entre les mailles, **caractérisé en ce que** le dispositif (2) comprend :
une unité d'inversion avant/arrière (92) pour inverser le type des mailles et la relation supérieure/inférieure entre les mailles en intervertissant le tissu avant (41) et le tissu arrière (42),
une unité de rotation à 180° (93) pour faire tourner le tissu tubulaire (40) de 180° autour de son axe central ;
des moyens d'inversion de relation de connexion (33) pour inverser la relation droite/gauche de connexion entre les mailles en ce qui concerne chacun des tissus avant et arrière (41, 42) ; et
des moyens de simulation pour générer une image de simulation du tissu tubulaire (40) pour une allocation des mailles, obtenue en inversant le devant et le derrière du tube après ces inversions.

6. Procédé de simulation d'un tissu tubulaire pour simuler un tissu tubulaire (40) comprenant une pluralité de mailles et un tissu avant (41) et un tissu arrière (42) comportant au moins des types de mailles de devant/de derrière, et une relation supérieure/inférieure entre des mailles se chevauchant, et une relation de connexion entre les mailles, **caractérisé en ce que** le procédé comprend :
une étape d'inversion d'attributs de mailles consistant à inverser le type des mailles et la relation supérieure/inférieure des mailles en ce qui concerne chacun des tissus avant et arrière (41, 42) ;
une étape consistant à inverser par symétrie les positions des mailles le long d'une ligne centrale verticale du tissu tubulaire (40) dans la direction de la largeur, en ce qui concerne chacun des tissus avant et arrière (41, 42) ; et
une étape d'inversion de la relation droite/gauche de connexion entre les mailles en ce qui concerne chacun des tissus avant et arrière (41, 42) ; et
une étape de génération d'une image de simulation du tissu tubulaire (40) pour une allocation des mailles, obtenue en inversant le devant et le derrière du tube après ces inversions.

7. Procédé de simulation d'un tissu tubulaire selon la revendication 6, **caractérisé en ce que** les positions, les types, la relation supérieure/inférieure et la relation de connexion droite/gauche des mailles sont mémorisés de façon électronique.

8. Programme de simulation (50) d'un tissu tubulaire pour simuler un tissu tubulaire (40) comprenant une pluralité de mailles et un tissu avant (41) et un tissu arrière (42) comportant au moins des types de mailles de devant/de derrière, et une relation supérieure/inférieure entre des mailles se chevauchant, et une relation de connexion entre les mailles, **caractérisé en ce que** le programme (50) comprend :
une instruction d'inversion d'attributs de mailles (54) pour inverser le type des mailles et la relation inférieure/supérieure entre les mailles du tissu tubulaire (40) en ce qui concerne chacun des tissus avant et arrière (41, 42) ;
une instruction d'inversion de position droite/gauche pour inverser par symétrie des positions des mailles le long d'une ligne centrale verticale du tissu tubulaire (40) dans la direction de la largeur, en ce qui concerne chacun des tissus avant et arrière (41, 42) ;
une instruction d'inversion de relation de connexion (33) pour une inversion de la relation droite/gauche de connexion entre les mailles en ce qui concerne chacun des tissus avant et arrière (41, 42) ; et
une instruction de simulation (52) pour générer une image de simulation du tissu tubulaire (40) pour une allocation des mailles, obtenue en inversant le devant et le derrière du tube après ces inversions.

9. Programme de simulation (50) d'un tissu tubulaire selon la revendication 8, comprenant en outre une instruction de mémorisation pour mémoriser les positions, les types, la relation supérieure/inférieure et la relation de connexion droite/gauche des mailles.
